(19) Europäisches Patentamt
European Patent Office
Office européen des brevets

(11) **EP 4 579 659 A1**

(12) **EUROPEAN PATENT APPLICATION**
published in accordance with Art. 153(4) EPC

(43) Date of publication:
**02.07.2025 Bulletin 2025/27**

(21) Application number: **23857078.2**

(22) Date of filing: **25.07.2023**

(51) International Patent Classification (IPC):
**G10L 25/54** (2013.01)   **G06F 16/68** (2019.01)

(52) Cooperative Patent Classification (CPC):
**G06F 16/68; G10L 25/54**

(86) International application number:
**PCT/JP2023/027136**

(87) International publication number:
**WO 2024/042962 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.08.2022   JP 2022134384**

(71) Applicant: **Sony Group Corporation
Tokyo 108-0075 (JP)**

(72) Inventors:
• **AKAMA, Taketo**
  **Tokyo 141-0022 (JP)**
• **KONOE, Natalia**
  **Tokyo 141-0022 (JP)**
• **KITANO, Hiroaki**
  **Tokyo 141-0022 (JP)**
• **KISHI, Haruhiko**
  **Tokyo 141-0022 (JP)**

(74) Representative: **2SPL Patentanwälte PartG mbB
Landaubogen 3
81373 München (DE)**

(54) **INFORMATION PROCESSING DEVICE, INFORMATION PROCESSING METHOD, AND INFORMATION PROCESSING PROGRAM**

(57)   An information processing device includes: a user interface unit that receives selection of a music track; and a processing unit that executes similarity search processing for a partial track that is at least a part of the music track selected, in which the similarity search processing includes first similarity search processing of searching for another music track including a partial track whose temporal change is similar to that of the partial track of the music track selected.

FIG.1

EP 4 579 659 A1

## Description

Field

The present disclosure relates to an information processing device, an information processing method, and an information processing program.

Background

For example, as disclosed in Patent Literature 1, various technologies related to music data processing have been proposed.

Citation List

Patent Literature

Patent Literature 1: JP 2011-175006 A

Summary

Technical Problem

One of music data processing technologies is a similar music search. The similar music search so far is limited to a search for similarity of an entire search target portion.

According to one aspect of the present disclosure, a range of the similar music search can be widened.

Solution to Problem

An information processing device according to one aspect of the present disclosure includes: a user interface unit that receives selection of a music track; and a processing unit that executes similarity search processing for a partial track that is at least a part of the music track selected, wherein the similarity search processing includes first similarity search processing of searching for another music track including a partial track whose temporal change is similar to that of the partial track of the music track selected.

An information processing method according to one aspect of the present disclosure inclues: receiving selection of a music track; and executing similarity search processing for a partial track that is at least a part of the music track selected, wherein the similarity search processing includes first similarity search processing of searching for another music track including a partial track whose temporal change is similar to that of the partial track of the music track selected.

An information processing program according to one aspect of the present disclosure causes a computer to execute: processing of receiving selection of a music track; and similarity search processing for a partial track that is at least a part of the music track selected, wherein the similarity search processing includes first similarity search processing of searching for another music track including a partial track whose temporal change is similar to that of the partial track of the music track selected.

An information processing device according to one aspect of the present disclosure includes a processing unit that executes similarity search processing for a partial track that is at least a part of an uploaded music track, wherein the similarity search processing includes first similarity search processing of searching for another music track including a partial track whose temporal change is similar to that of the partial track of the uploaded music track.

Brief Description of Drawings

FIG. 1 is a diagram illustrating an example of a schematic configuration of an information processing device according to an embodiment.
FIG. 2 is a diagram illustrating an example of a similar music search.
FIG. 3 is a diagram illustrating an example of the similar music search.
FIG. 4 is a diagram illustrating an example of the similar music search.
FIG. 5 is a diagram illustrating an example of the similar music search.
FIG. 6 is a diagram illustrating an example of the similar music search.

FIG. 7 is a diagram illustrating an outline of a learned model.
FIG. 8 is a diagram illustrating an example of concat.
FIG. 9 is a flowchart illustrating an example of processing (information processing method) executed in the information processing device.
FIG. 10 is a diagram illustrating an example of learning.
FIG. 11 is a diagram schematically illustrating a similarity according to a loss function $L_{SSL}$.
FIG. 12 is a diagram illustrating a modification.
FIG. 13 is a diagram illustrating an example of a hardware configuration.

Description of Embodiments

Hereinafter, embodiments of the present disclosure will be described in detail with reference to the drawings. Note that, in each of the following embodiments, the same elements are denoted by the same reference numerals, and redundant description will be omitted.

The present disclosure will be described in accordance with the following order of items.

0. Introduction
1. Embodiment
2. Modification
3. Hardware configuration example
4. Examples of effects

0. Introduction

A similar music search has been limited to a search for similarity of an entire search target portion, for example, a similarity search of an entire atmosphere. According to the disclosed technology, it is possible to perform a similarity search of temporal transition of the search target portion, that is, temporal change.

In one embodiment, a learned model is used. Learning of the learned model includes distance learning and classification learning. Manually labeled classification learning alone may not provide sufficient performance due to insufficient quantity and quality of labels. In order to compensate for this, self-supervised learning (SSL) is introduced. Examples of the self-supervised learning are SimCLR, BYOL, Simsiam, and the like. The self-supervised learning can be used not only at the time of preliminary learning but also at the time of fine tuning (introduction of an auxiliary loss). At the time of fine tuning, padding (Augmentation) of music data does not have to be performed, and quality of data can be improved accordingly.

1. Embodiment

An embodiment enabling the similar music search will be described. Hereinafter, music (or audio) data is referred to as a music track. Typically, the music track points to one musical composition having a certain amount of playing time. Examples of the playing time are several seconds, several tens of seconds, several minutes, several tens of minutes, and longer than those.

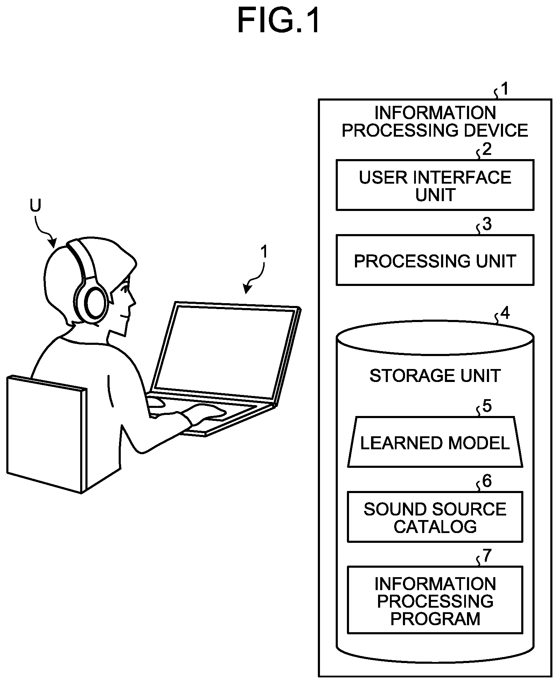

FIG. 1 is a diagram illustrating an example of a configuration of an information processing device according to the embodiment. A user of an information processing device 1 is referred to as a user U and illustrated in the figure. The information processing device 1 exemplified is a laptop terminal device, but a specific form of the information processing device 1 is not limited thereto. Other examples of the information processing device 1 include a desktop terminal device, a mobile terminal device, and the like. Examples of the mobile terminal device include a tablet terminal device and a smartphone.

FIG. 1 also illustrates functional blocks of the information processing device 1. The information processing device 1 includes a user interface unit 2, a processing unit 3, and a storage unit 4.

The user interface unit 2 receives operation (user operation) on the information processing device 1 by the user U and perform presentation (display, sound output, or the like) of information to the user U. Specific examples of the user interface unit 2 include a display, a keyboard, and the like. A headset worn by the user U can also be an example of the user interface unit 2.

The processing unit 3 functions as an overall control unit that controls each of parts of the information processing device 1 and executes various types of processing. Unless otherwise specified, the processing by the information processing device 1 is executed by the processing unit 3.

The storage unit 4 stores information used in the information processing device 1. As the information stored, a learned model 5, a sound source catalog 6, and an information processing program 7 are exemplified

The learned model 5 is used for the similar music search. Details will be described later.

The sound source catalog 6 contains information regarding a large number of music tracks. A music track is retrieved from the sound source catalog 6 by similarity search processing to be described later. The sound source catalog 6 is provided by, for example, a music provider, or the like. The sound source catalog 6 may be updated in a timely manner.

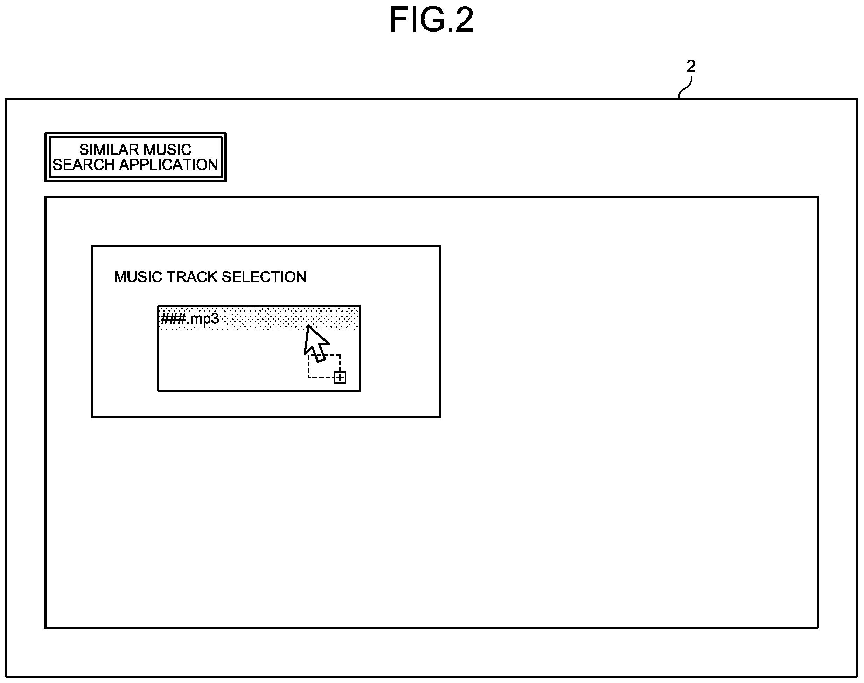

The information processing program 7 is a program (application, software) for causing a computer to function as the information processing device 1. For example, the information processing program 7 is executed, whereby an application for performing the similar music search is activated. The application is also referred to as a similar music search application. A description will be given with reference to FIGS. 2 to 6.

FIGS. 2 to 6 are diagrams illustrating examples of the similar music search. Display screens by the user interface unit 2 are schematically illustrated. Note that display and presentation may be interchangeably read as appropriate, within a range without contradiction.

As illustrated in FIG. 2, selection of a music track is received. In this example, a music track schematically represented as "###.mp3" is selected by drag & drop operation.

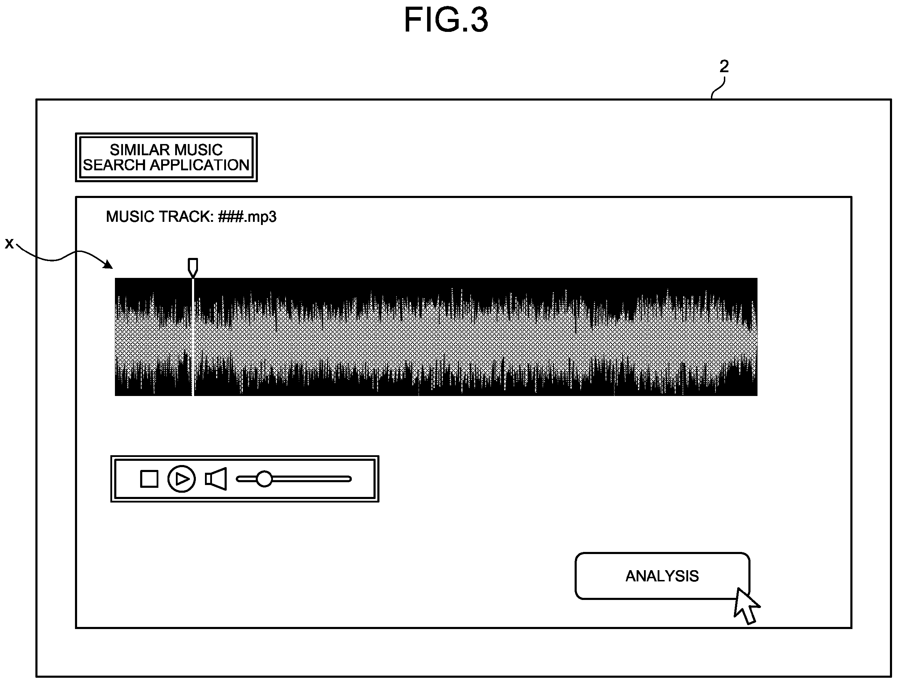

As illustrated in FIG. 3, the selected music track is displayed in a playable form. The selected and displayed music track is referred to as a music track x and illustrated. In this example, a waveform graph of the music track x is displayed together with a name "###. mp3" of the music track x. The horizontal axis of the graph indicates time, and the vertical axis indicates, for example, amplitude.

An operation bar is displayed at the lower left of the waveform graph. For example, by operating the operation bar to play the music track x, it is possible to confirm the content of the previously selected music track x.

An analysis button is displayed at the lower right of the waveform graph. When the analysis button is selected, the processing unit 3 of the information processing device 1 executes feature analysis processing for the music track x. An example of an analysis method is twelve-tone analysis, and a feature value is extracted based on the analysis method. Not limited thereto, various known analysis methods may be used.

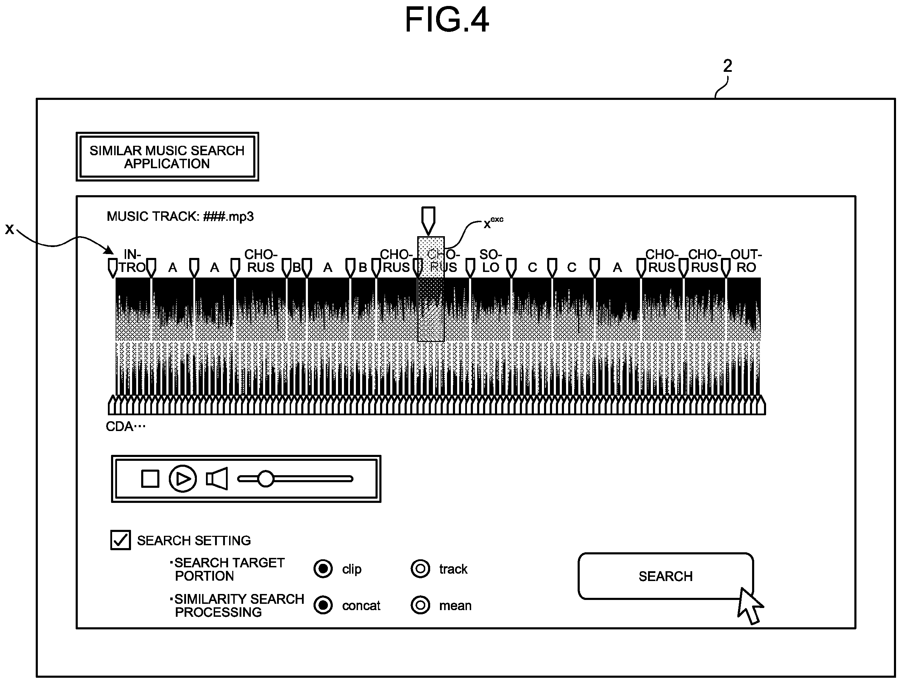

As illustrated in FIG. 4, a result of analysis of the music track x is displayed. The exemplified result of analysis includes music composition and chord type of music track x. As the music composition, an intro, a melody A, a melody B, a melody C, a chorus, a solo, an outro, and the like are displayed in accordance with corresponding positions of the waveform graph. As the chord type, a chord C, a chord D, a chord A, and the like are displayed in accordance with corresponding positions of the waveform graph. Of course, various other feature values may also be displayed. The waveform graph and the result of analysis may be enlarged so that the result of analysis can be easily viewed. By performing such analysis, it is easy to perform range designation for the search target portion described below.

Range designation is performed for a search target portion (search key) in the music track x. This portion is referred to as a partial track $x^{exc}$ and illustrated. The partial track $x^{exc}$ is at least a part of the music track x, and may be the entire music track x.

In the example illustrated in FIG. 4, first, the default partial track $x^{exc}$ is automatically subjected to range designation, and displayed. Specifically, among the feature portions of the music track x obtained from the result of analysis described above, the most representative feature portion (for example, the most exciting portion) is subjected to range designation as the default partial track $x^{exc}$. The exemplified default partial track $x^{exc}$ is a part of the chorus.

The music track x is displayed in a form in which range designation by user operation for the partial track $x^{exc}$ is enabled. The user U can manually perform range designation for the partial track $x^{exc}$ when changing the partial track $x^{exc}$ subjected to range designation as the default.

For example, similarity search processing for the partial track $x^{exc}$ designated as described above (a similarity search using the partial track $x^{exc}$ as a search key) is executed by the processing unit 3. Here, the partial track $x^{exc}$ that is the search target portion can be set to a part or all of the music track x, or (the type of) the similarity search processing can be set. Specifically, in the example illustrated in FIG. 4, a check box for search setting is displayed below the operation bar. When this is checked, the search target portion and the similarity search processing can be set.

In the setting of the search target portion, (exclusive) selection of clip and track is received. When clip is selected, it is possible to perform range designation for a portion of the music track x as a partial track $x^{exc}$. The above-described range designation for the partial track $x^{exc}$ corresponds to range designation in the case of clip. When track is selected, all of the music track x becomes the partial track $x^{exc}$.

In the setting of the similarity search processing, selection of concat and mean is received. Concat is first similarity search processing of searching for another music track including a partial track whose temporal change (temporal transition) is similar to that of the partial track $x^{exc}$. Mean is second similarity search processing of searching for another music track including a partial track entirely (for example, in atmosphere) similar to the partial track $x^{exc}$. The details of concat and mean will be described later.

Note that, in a case where there is no check of the search setting, any default setting may be used.

A search button is displayed on the right side of the search setting. When the search button is selected, the processing unit 3 of the information processing device 1 executes the similarity search processing for the partial track $x^{exc}$. A music track including a partial track similar to the partial track $x^{exc}$ is retrieved from the sound source catalog 6. The similarity search processing to be executed is the similarity search processing selected in the search setting, and is specifically concat or mean.

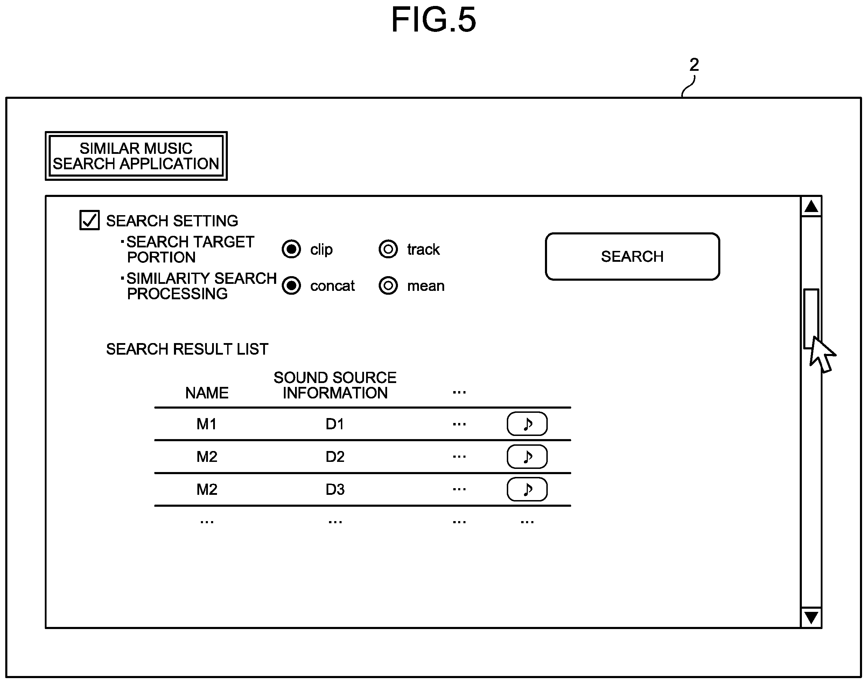

As illustrated in FIG. 5, a search result is displayed. In this example, music tracks hit in the similarity search processing are displayed in a list as a search result list. As items of the list, a name and sound source information are exemplified. The name is a name (a song name or the like) of the music track, and is schematically indicated as "M1" or the like. The sound source information is, for example, a music provider that provides the music track or a providing place thereof (CD, website, or the like), and is schematically indicated as "D1" or the like.

The music track hit in the similarity search processing is displayed in a playable form. In this example, play buttons "♪" corresponding to respective music tracks are displayed. When each button is selected, the corresponding music track is played. The content of the music track hit in the similarity search can be confirmed.

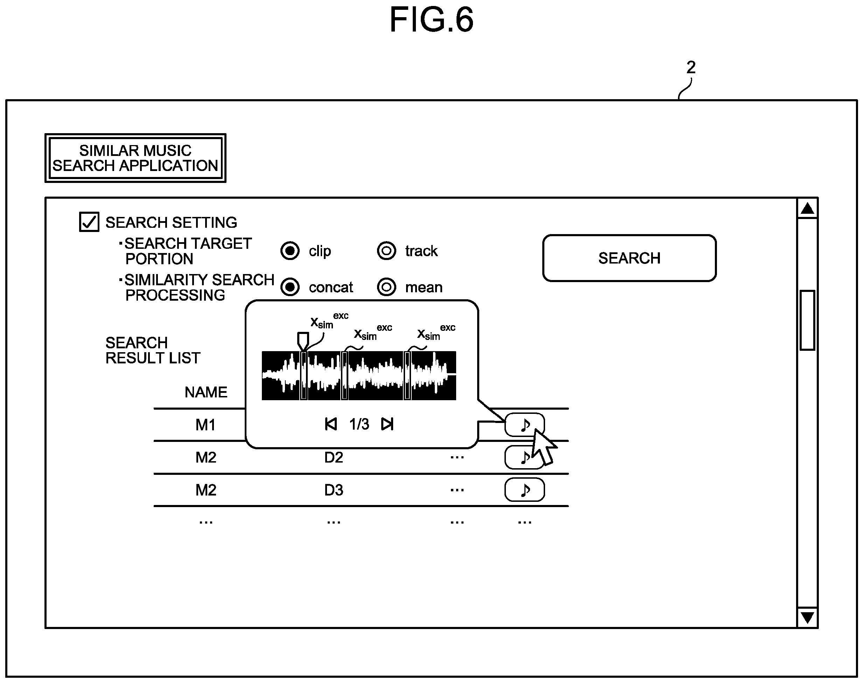

Specifically, as illustrated in FIG. 6, the waveform graph of the music track for which the play button is selected is displayed. The displayed music track includes a similar partial track $x_{sim}^{exc}$ similar to the partial track $x^{exc}$. In this example, there are three similar partial tracks $x_{sim}^{exc}$. Below the waveform graph, "1/3" indicates that the first similar partial track $x_{sim}^{exc}$ of the three similar partial tracks $x_{sim}^{exc}$ is being played.

For example, the operation described above is repeated until a music track desired by the user U is found. In this way, the similar music search using the information processing device 1 is performed.

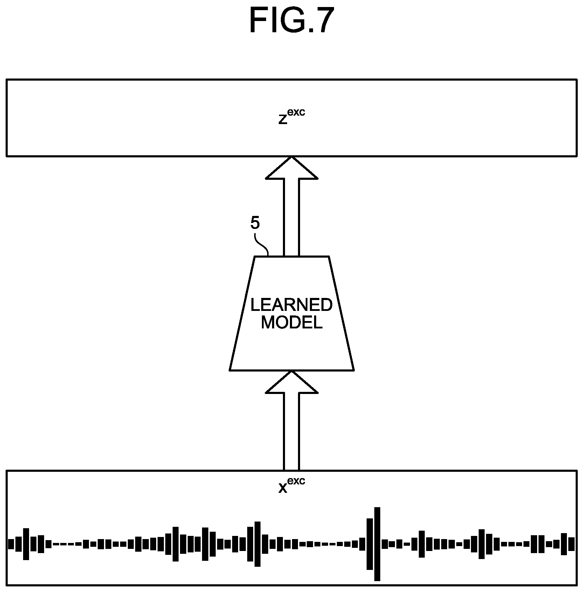

The similarity search processing executed by the processing unit 3 will be described. As described above, the learned model 5 (FIG. 1) is used for the similarity search processing. A description will be given also with reference to FIG. 7.

FIG. 7 is a diagram illustrating an outline of the learned model. The learning of the learned model 5 is performed to output a corresponding embedding vector $z^{exc}$ when the partial track $x^{exc}$ is input. The learning of the learned model 5 includes distance learning and classification learning. A portion of distance learning can mainly correspond to learning of conversion from the partial track $x^{exc}$ to the embedding vector $z^{exc}$. The embedding vector $z^{exc}$ is a feature value vector obtained by mapping the partial track $x^{exc}$ to a latent space (also referred to as a Z space or the like). Closeness of a distance between feature value vectors indicates a degree of similarity between the feature value vectors.

A flow of the similarity search processing will be described. The processing unit 3 inputs the partial track $x^{exc}$ of the selected and designated music track x to the learned model 5. The learned model 5 outputs the embedding vector $z^{exc}$ corresponding to the input partial track $x^{exc}$. The processing unit 3 acquires the embedding vector $z^{exc}$ output by the learned model 5.

The processing unit 3 searches the sound source catalog 6 for another music track including a partial track corresponding to an embedding vector having a short distance to the acquired embedding vector $z^{exc}$, that is, the similar partial track $x_{sim}^{exc}$. For example, threshold determination for a cosine similarity may be used to determine whether the distance is short.

The embedding vector corresponding to the partial track of each music track included in the sound source catalog 6 may be extracted in advance by using the learned model 5 and stored in the storage unit 4, or may be extracted by using the learned model 5 at the time of the similarity search processing. The processing unit 3 refers to them to search the sound source catalog 6 for a music track including the similar partial track $x_{sim}^{exc}$. The music track hit in the search is displayed by the user interface unit 2 as described above with reference to FIGS. 5 and 6.

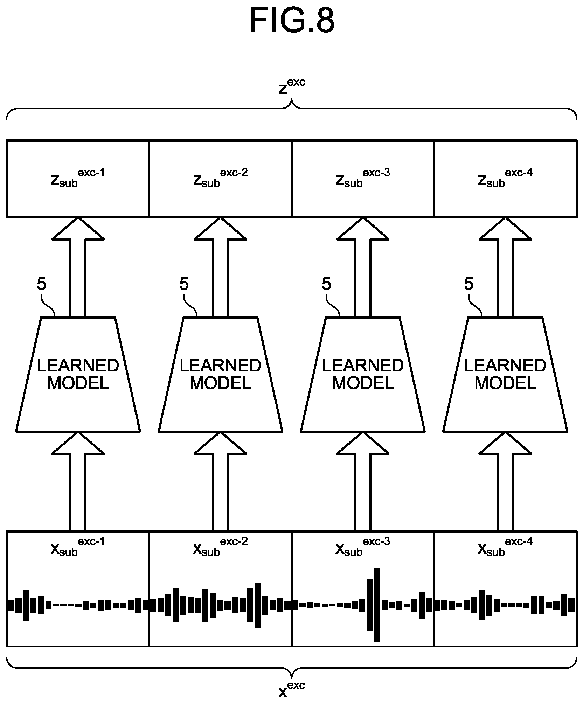

As described above, the similarity search processing includes concat and mean. The similar partial track $x_{sim}^{exc}$ of the music track hit in concat is similar in temporal change to the partial track $x^{exc}$. The similar partial track $x_{sim}^{exc}$ of the music track hit in mean is entirely similar to the partial track $x^{exc}$. In mean, as described above with reference to FIG. 7, the partial track $x^{exc}$ is directly input to the learned model 5 to obtain the embedding vector $z^{exc}$. On the other hand, in concat, the partial track $x^{exc}$ is subjected to time-division and input to the learned model 5 to obtain the embedding vector $z^{exc}$. A description will be given with reference to FIG. 8.

FIG. 8 is a diagram illustrating an example of concat. The processing unit 3 divides in order the partial track $x^{exc}$ on the time axis to generate a plurality of sub-partial tracks $x_{sub}^{exc}$. In this example, the partial track $x^{exc}$ is divided into four, and a sub-partial track $x_{sub}^{exc-1}$ to a sub-partial track $x_{sub}^{exc-4}$ are generated. The lengths of the sub-partial track $x_{sub}^{exc}$ may be the same as each other. For example, in a case where the length of the partial track $x^{exc}$ is 4 seconds, the lengths of all of the sub-partial track $x_{sub}^{exc-1}$ to the sub-partial track $x_{sub}^{exc-4}$ may be 1 second.

The processing unit 3 inputs each of the plurality of sub-partial tracks $x_{sub}^{exc}$ to the learned model 5. In this example, four learned models 5 corresponding to the sub-partial track $x_{sub}^{exc-1}$ to the sub-partial track $x_{sub}^{exc-4}$ are used in parallel. However, one learned model 5 may be used to process the four sub-partial tracks $x_{sub}^{exc}$ in order, or each of two learned models 5 may be used to process two sub-partial tracks $x_{sub}^{exc}$. The learned model 5 outputs embedding vectors respectively corresponding to the plurality of sub-partial tracks $x_{sub}^{exc}$. The embedding vectors are referred to as sub-embedding vectors $z_{sub}^{exc}$ and illustrated. Specifically, a sub-embedding vector $z_{sub}^{exc-1}$ to a sub-embedding vector $z_{sub}^{exc-4}$ corresponding to the sub-partial track $x_{sub}^{exc-1}$ to the sub-partial track $x_{sub}^{exc-4}$ are output.

The processing unit 3 generates the embedding vector $z^{exc}$ corresponding to the partial track $x^{exc}$ by connecting a plurality of sub-embedding vectors $z_{sub}^{exc}$ in (divided) order. A temporal change in the partial track $x^{exc}$ is reflected in the embedding vector z^exc thus obtained. The processing unit 3 searches the sound source catalog 6 for a music track including a similar partial track $x_{sim}^{exc}$ similar to the generated embedding vector z^exc. By the search, a music track is hit including a similar partial track $x_{sim}^{exc}$ whose temporal change is similar to that of the partial track x^exc.

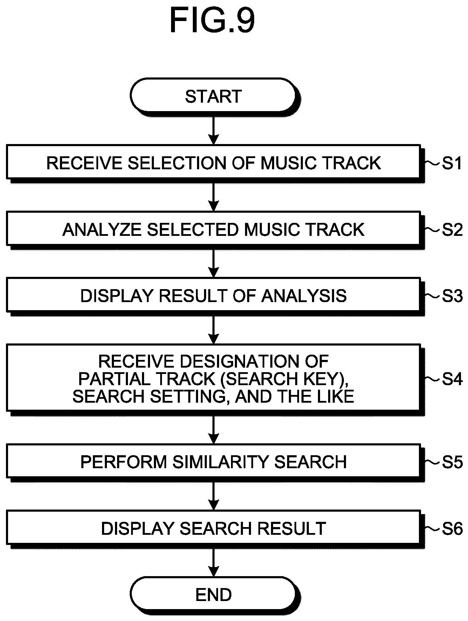

FIG. 9 is a flowchart illustrating an example of processing (information processing method) executed in the information processing device. Since the specific content of each of pieces of processing is as described above, the detailed description will be omitted.

In step S1, the user interface unit 2 receives selection of the music track x. In step S2, the processing unit 3 analyzes the selected music track x. Specific examples of these are as described above with reference to FIGS. 2 and 3.

In step S3, the user interface unit 2 displays a result of analysis. In step S4, the user interface unit 2 receives range designation, search setting, and the like for the partial track x^exc. Specific examples of these are as described above with reference to FIG. 4.

In step S5, the processing unit 3 executes the similarity search processing. For example, as described above with reference to FIGS. 4, 7, and 8, concat or mean is executed.

In step S6, the user interface unit 2 displays a search result. Specific examples are as described above with reference to FIGS. 5 and 6.

<Learning Phase>

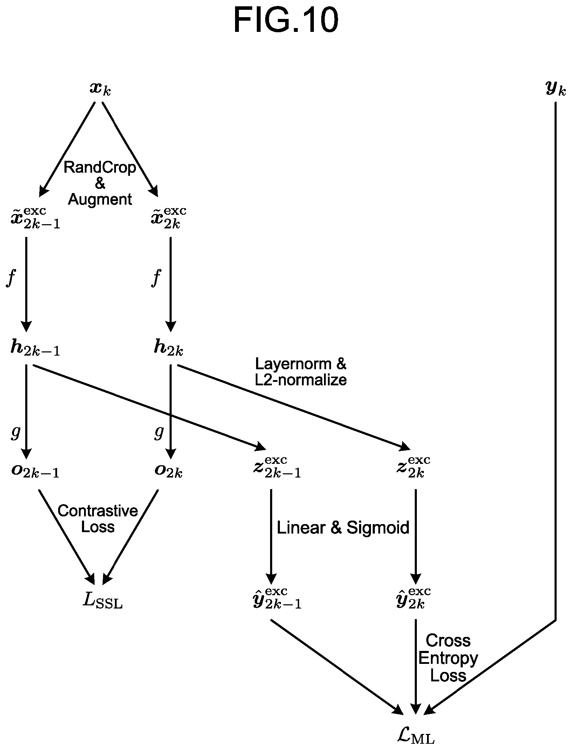

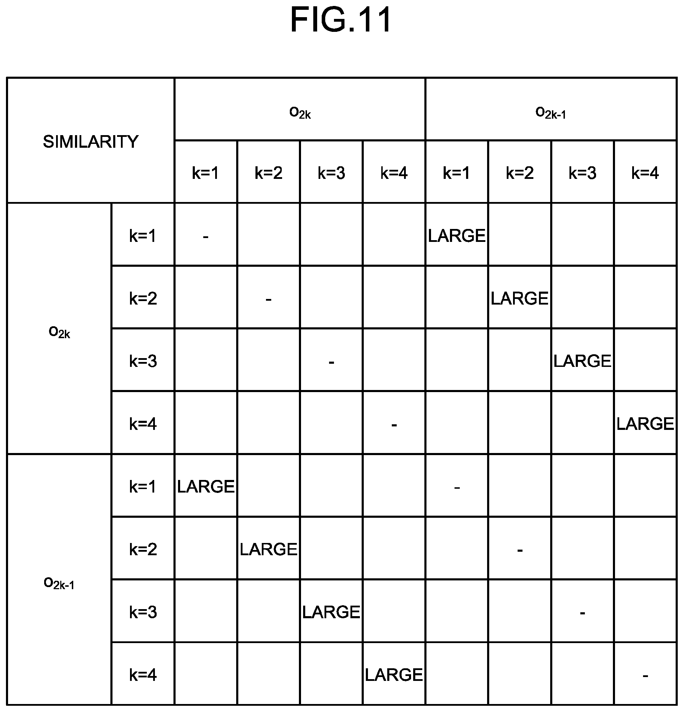

A learning method (production method) for the learned model 5 described above will be described with reference to FIGS. 10 and 11.

FIG. 10 is a diagram illustrating an example of learning. The learned model 5 described above includes a deep neural network (DNN) for which learning is performed to implement a conversion function (function or the like) of each portion appearing in FIG. 10. In a learning stage, the learning is performed for the entire DNN. A part of the DNN after the learning, for example, a portion that converts the partial track x^exc into the embedding vector z^exc is extracted, whereby the learned model 5 is obtained. The learning may be not only preliminary learning but also learning at the time of fine tuning.

A specific learning flow will be described by also using mathematical expressions. A data set D indicated by the following expression (1) is prepared. The data set D is a set of $N_{label}$ pairs of a music track $x_k$ and a tag $Y_k$ that are labeled and $N_{unlabel}$ music tracks $x_k$ that are not labeled.

$$\mathcal{D} = \{(\boldsymbol{x}_k, \boldsymbol{y}_k)\}_{k=1}^{N_{label}} \bigcup \{\boldsymbol{x}_k\}_{k=1}^{N_{unlabel}} \qquad \cdots (1)$$

Two different partial tracks x^exc that are randomly extracted from the same music track $x_k$ and changed are generated (RandCrop & Augment). Examples of the change include pitch shift, noise addition, low pass filtering (high sound range cutting), high pass filtering (low sound range cutting), and the like, but are not limited thereto. A subscript 2k-1 or 2k is added so that the generated partial tracks x^exc can be distinguished from each other. A symbol "~" indicates that a change has been made. By making change, it is possible to perform padding (Augment) of data. Note that Augment does not have to be performed at the time of fine tuning.

Learning is performed of a function $F_{sim}$ and a function $F_{tag}$ indicated in the following expressions (2) and (3). The learning of these correspond to learning of conversion from the partial track x^exc to the embedding vector z^exc and learning of conversion to a probability vector y^exc. A bracketed portion related to the partial track x^exc on the right side indicates a series of data extracted from the music track $x_k$. Aggregate() is an average operation and is divided by an L2 norm.

$$F_{sim}(\boldsymbol{x}_k) = \text{Aggregate}_{sim}\left(\left(f_{sim}(\boldsymbol{x}_{k,e}^{exc})\right)_{e=1}^{E}\right) \qquad \cdots (2)$$

$$F_{tag}(\boldsymbol{x}_k) = \text{Aggregate}_{tag}\left(\left(f_{tag}(\boldsymbol{x}_{k,e}^{exc})\right)_{e=1}^{E}\right) \qquad \cdots (3)$$

In the above, the function $F_{sim}$ is described by using a function $f_{sim}$. The function $F_{tag}$ is described by using a function $f_{tag}$. Describing the function $f_{tag}$ above first, the function $f_{tag}$ is described as the following expression (4) by using the function $f_{sim}$, a parameter W, and the like. Parameters W and $\sigma$ indicate sigmoid activation.

$$f_{tag}(\boldsymbol{x}_{k,e}^{exc}) = \sigma\left(W f_{sim}(\boldsymbol{x}_{k,e}^{exc})\right) \qquad \cdots (4)$$

The function $f_{sim}$ is described as the following expression (5) by using a function f. LN indicates layer normalization.

$$f_{\text{sim}}(\cdot) = \frac{\text{LN}(f(\cdot))}{\|\text{LN}(f(\cdot))\|_2} \qquad \cdots (5)$$

By performing learning of the function f and the parameter W (hereinafter, also referred to as a "function f and the like"), it is possible to perform learning of the function $f_{\text{sim}}$ and the function $f_{\text{tag}}$, and eventually to perform learning of the function $F_{\text{sim}}$ and the function $F_{\text{tag}}$.

The learning of the function f and the like is performed by learning of the entire DNN including a function g. The learning includes distance learning and classification learning using a loss function. As the loss function, two loss functions of a loss function $L_{\text{SSL}}$ and a loss function $L_{\text{ML}}$ are used. The loss function $L_{\text{SSL}}$ is a self-supervised loss function, and is a loss function in target learning (contrastive learning) in this example. The loss function $L_{\text{ML}}$ is a supervised loss function, and is a cross entropy (binary cross entropy) loss function in this example. Teacher data of this supervised learning is given as a tag $y_k$. The tag $y_k$ corresponds to correct data of the probability vector $y^{\text{exc}}$. At the time of learning, learning is performed of the function $F_{\text{sim}}$ by using the loss function $L_{\text{SSL}}$, and learning is performed of the function $F_{\text{sim}}$ and the function $F_{\text{tag}}$ by using the loss function $L_{\text{ML}}$.

For example, the learning is performed in units of mini-batches $\{x_k\}$ (k = 1 to B) obtained from the data set D. As an example, a case will be described of using contrastive learning of musical representation (CLMR) based on a SimCLR framework. Two operators for Augment are referred to as an operator t and an operator t'. In each of pieces of mini-batch learning, the following expressions (6) to (11) are calculated.

$$\tilde{x}^{\text{exc}}_{2k-1} = t\left(\text{RandCrop}\left(x_k\right)\right) \qquad \cdots (6)$$

$$h_{2k-1} = f\left(\tilde{x}^{\text{exc}}_{2k-1}\right) \qquad \cdots (7)$$

$$o_{2k-1} = g\left(h_{2k-1}\right) \qquad \cdots (8)$$

$$\tilde{x}^{\text{exc}}_{2k} = t'\left(\text{RandCrop}\left(x_k\right)\right) \qquad \cdots (9)$$

$$h_{2k} = f\left(\tilde{x}^{\text{exc}}_{2k}\right) \qquad \cdots (10)$$

$$o_{2k} = g\left(h_{2k}\right) \qquad \cdots (11)$$

A pair of the left side of the expression (6) and the left side of the expression (9) is a pair of two partial tracks $x^{\text{exc}}$ obtained from the same music track $x_k$, and is also referred to as a correct pair. A contrastive loss between $o_{2k-1}$ and $o_{2k}$ (expressions (8) and (11)) obtained from the correct pair corresponds to the loss function $L_{\text{SSL}}$. The loss function $L_{\text{SSL}}$ is determined to cause a similarity between partial tracks $x^{\text{exc}}$ derived from music tracks $x_k$ identical to each other to be larger than a similarity between partial tracks $x^{\text{exc}}$ derived from music tracks $x_k$ different from each other. A description will be given with reference to FIG. 11.

FIG. 11 is a diagram schematically illustrating a similarity according to the loss function $L_{\text{SSL}}$. For ease of understanding, a description will be given with only four kinds of $o_{2k-1}$ and $o_{2k}$ derived from four kinds of music tracks $x_k$ of k = 1 to 4. The $o_{2k-1}$ and $o_{2k}$ having the same value of k are the $o_{2k-1}$ and $o_{2k}$ derived from the partial tracks $x^{\text{exc}}$ of the correct pair. The $o_{2k-1}$ and $o_{2k}$ indicated as "large" in the figure are the $o_{2k-1}$ and $o_{2k}$ derived from the correct pair, and a similarity between them is larger than a similarity between the $o_{2k-1}$ and $o_{2k}$ derived from a pair of partial tracks $x^{\text{exc}}$ extracted from music tracks $x_k$ different from each other. Note that, as indicated by "-" in the figure, a similarity between the same $o_{2k-1}$ and between the same $o_{2k}$ is not considered.

Returning to FIG. 10, the loss function $L_{\text{SSL}}$ will be described by the mathematical expressions. A set of partial tracks $x^{\text{exc}}$ including a correct pair of 2k - 1 = i and 2k = j is expressed by the following expression (12).

$$\{\tilde{x}^{\text{exc}}_l\}^{2B}_{l=1} \qquad \cdots (12)$$

In the set described above, for a given i-th partial track $x^{\text{exc}}$, the j-th partial track $x^{\text{exc}}$ where l is different from i (with l ≠ i) is identified. A loss function $L_{\text{SSL}}(i, j)$ for the i-th partial track $x^{\text{exc}}$ and the j-th partial track $x^{\text{exc}}$ is expressed by using the following expressions (13) and (14).

$$L_{\text{SSL}}(i, j) = -\log \frac{\exp\left(\text{sim}\left(\boldsymbol{o}_i, \boldsymbol{o}_j\right)/\tau\right)}{\sum_{l=1}^{2B} \mathbb{1}_{[l \neq i]} \exp\left(\text{sim}\left(\boldsymbol{o}_i, \boldsymbol{o}_l\right)/\tau\right)} \quad \cdots (13)$$

$$\text{sim}(\boldsymbol{u}, \boldsymbol{v}) = \boldsymbol{u}^\top \boldsymbol{v}/\|\boldsymbol{u}\|_2 \|\boldsymbol{v}\|_2 \quad \cdots (14)$$

The overall loss function $L_{\text{SSL}}$ is obtained as the following expression (16) by calculating and averaging the $L_{\text{SSL}}$(i, j) described above for all pairs, that is, the following expression (15).

$$(i, j) \in \left\{(2k - 1, 2k)\right\}_{k=1}^{B} \bigcup \left\{(2k, 2k - 1)\right\}_{k=1}^{B} \quad \cdots (15)$$

$$\mathcal{L}_{\text{SSL}} = \frac{1}{2B} \sum_{k=1}^{B} [L_{\text{SSL}}(2k - 1, 2k) + L_{\text{SSL}}(2k, 2k - 1)] \quad \cdots (16)$$

For example, the loss function $L_{\text{SSL}}$ described above is used as the self-supervised loss function. Learning can be performed of similarity of features common to partial tracks $x^{\text{exc}}$ extracted from the same music track $x_k$.

Parameters $h_{2k-1}$ and $h_{2k}$ obtained by the function f are not only converted into $o_{2k-1}$ and $o_{2k}$ by the function g, but also subjected to layer normalization (LN()) and normalized with the L2 norm. When generalized description is performed as $h_i$, an embedding vector $z_i^{\text{exc}}$ is obtained by normalization as in the following expression (17). FIG. 10 illustrates the embedding vector $z^{\text{exc}}$ in the case of i = 2k - 1 and i = 2k.

$$\boldsymbol{z}_i^{\text{exc}} = \frac{\text{LN}(\boldsymbol{h}_i)}{\|\text{LN}(\boldsymbol{h}_i)\|_2} \quad \cdots (17)$$

When the embedding vector $z_i^{\text{exc}}$ is multiplied by the parameter W and each element is assigned to the sigmoid function, a probability vector $y_i^{\text{exc}}$ of classification is obtained as in the following expression (18). FIG. 10 illustrates the probability vector $y_i^{\text{exc}}$ in the case of i = 2k - 1 and i = 2k.

$$\hat{\boldsymbol{y}}_i^{\text{exc}} = \sigma\left(W \boldsymbol{z}_i^{\text{exc}}\right) \quad \cdots (18)$$

Cross entropy losses for each probability vector $y_i^{\text{exc}}$ are averaged to obtain a loss function $L_{\text{ML}}$(i) for each probability vector $y_i^{\text{exc}}$ as in the following expression (19) .

$$L_{\text{ML}}(i) = \frac{1}{T} \sum_{t}^{T} \left[-\boldsymbol{y}_i[t] \log\left(\hat{\boldsymbol{y}}_i^{\text{exc}}[t]\right) - (1 - \boldsymbol{y}_i[t]) \log\left(1 - \hat{\boldsymbol{y}}_i^{\text{exc}}[t]\right)\right] \quad \cdots (19)$$

It is assumed that the music track $x_k$ of the following expression (20) is a set of all labeled samples at k = 1 to B, and the loss function $L_{\text{ML}}$(i) is calculated and averaged for samples after Augment in labeled subsets. The loss function $L_{\text{ML}}$ is obtained as indicated in the following expression (21).

$$\left\{\boldsymbol{x}_k : k \in \mathcal{K}_{\text{label}} \subseteq \{1, 2, ..., B\}\right\} \quad \cdots (20)$$

$$\mathcal{L}_{\text{ML}} = \frac{1}{|\mathcal{K}_{\text{label}}|} \sum_{k \in \mathcal{K}_{\text{label}}} [L_{\text{ML}}(2k - 1) + L_{\text{ML}}(2k)] \quad \cdots (21)$$

For example, the loss function $L_{\text{LM}}$ is used as the supervised loss function.

Note that a final loss function $L_{\text{SSML}}$ is expressed by the following expression (22). A parameter $\lambda$ is a balancing factor between the loss function $L_{\text{SSL}}$ and the loss function $L_{\text{ML}}$. Since the self-supervised learning requires a long learning period, first, the learning may be performed by using only the loss function $L_{SSL}$, and then the learning may be performed by using the loss function $L_{SSML}$.

$$\mathcal{L}_{SSML} = \lambda \mathcal{L}_{SSL} + \mathcal{L}_{ML} \quad \cdots (22)$$

For example, as described above, the learning using the loss function $L_{SSL}$, that is, the self-supervised learning can be introduced. As a result, quality of the learning and thus accuracy of the similarity search can be improved.

As described above, learning of the entire DNN may performed by introducing the self-supervised learning not only at the time of preliminary learning but also at the time of fine tuning (introduction of auxiliary loss). In that case, the Augmentation of the music track $x_k$ does not have to be performed. Accordingly, quality of learning data can be improved.

2. Modification

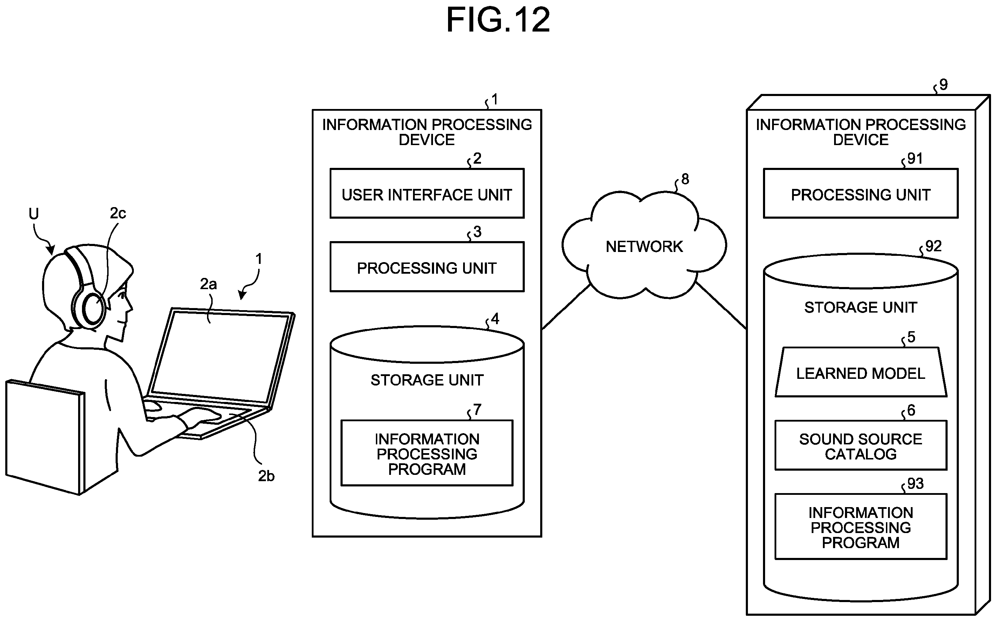

FIG. 12 is a diagram illustrating a modification. The information processing method described above is implemented not only by the information processing device 1 but also by cooperation of the information processing device 1 and an information processing device 9. The information processing device 9 is, for example, a server device, and communicates with the information processing device 1 via a network 8. The information processing device 1 and the information processing device 9 can also be referred to as a client device and a server device. FIG. 11 illustrates functional blocks of the information processing device 9. The information processing device 9 includes a processing unit 91 and a storage unit 92.

The processing unit 91 functions as an overall control unit that controls each of parts of the information processing device 9 and executes various types of processing. Unless otherwise specified, processing by the information processing device 9 is executed by the processing unit 91.

The storage unit 92 stores information used in the information processing device 1. As the information stored, the learned model 5, the sound source catalog 6, and information processing program 93 are exemplified. The learned model 5 and the sound source catalog 6 are as described above. The information processing program 93 is a program for causing a computer to function as the information processing device 9. For example, the information processing program 7 is executed in the information processing device 1 and the information processing program 93 is executed in the information processing device 9, whereby the similar music search application described above becomes available.

In this example, the processing unit 91 of the information processing device 9 executes the similarity search processing for the partial track $x^{exc}$, that is, concat or mean. For example, the music track x selected via the user interface unit 2 of the information processing device 1 is uploaded (transmitted) to the information processing device 9 via the network 8. The processing unit 91 of the information processing device 9 analyzes the uploaded music track x. A result of analysis is displayed by the user interface unit 2 of the information processing device 1, and range designation, search setting, and the like for the partial track $x^{exc}$ are performed. Information on these is also transmitted from the information processing device 1 to the information processing device 9. The processing unit 91 of the information processing device 9 searches the sound source catalog 6 for another music track including the similar partial track $x_{sim}^{exc}$ similar to the partial track $x^{exc}$ by using the learned model 5 according to the content of the search setting. Since the specific processing is as described above, the description thereof is omitted.

For example, similar music search can be performed by a system (client-server system) including the information processing device 1 and the information processing device 9 as described above.

In the above embodiment, concat and mean have been described as examples of the similarity search processing. However, there may be similarity search processing other than those.

3. Hardware configuration example

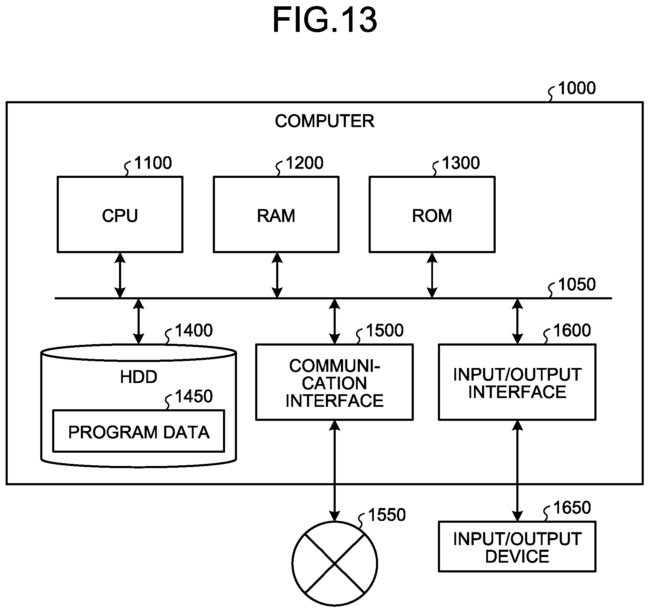

FIG. 13 is a diagram illustrating an example of a hardware configuration. The information processing device 1 and the information processing device 9 described above can be implemented by a computer 1000. The computer 1000 includes a CPU 1100, a RAM 1200, a read only memory (ROM) 1300, a hard disk drive (HDD) 1400, a communication interface 1500, and an input/output interface 1600. Units of the computer 1000 are connected to each other by a bus 1050.

The CPU 1100 operates on the basis of a program stored in the ROM 1300 or the HDD 1400, and controls each unit. For example, the CPU 1100 deploys a program stored in the ROM 1300 or the HDD 1400 in the RAM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer-readable recording medium that non-transiently records a program executed by the CPU 1100, data used by the program, and the like. Specifically, the HDD 1400 is a recording medium that records the information processing program 7 and the information processing program 93 that are examples of program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input/output interface 1600 is an interface for connecting an input/output device 1650 and the computer 1000 to each other. For example, the CPU 1100 receives data from an input device such as a keyboard or a mouse via the input/output interface 1600. Furthermore, the CPU 1100 transmits data to an output device such as a display, a speaker, or a printer via the input/output interface 1600. Furthermore, the input/output interface 1600 may function as a media interface that reads a program or the like recorded in a predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the information processing device 1, the CPU 1100 of the computer 1000 implements functions of the processing unit 3 and the like by executing the information processing program 7 loaded on the RAM 1200. Furthermore, the HDD 1400 stores data in the storage unit 4 such as the information processing program 7. Note that, the CPU 1100 reads and executes the program data 1450 from the HDD 1400, but as another example, may acquire these programs from another device via the external network 1550.

4. Examples of effects

The technology described above is specified as follows, for example. One of the disclosed technologies is the information processing device 1. As described with reference to FIGS. 1, 4, 8, and the like, the information processing device 1 includes the user interface unit 2 that receives the selection of the music track x, and the processing unit 3 that executes the similarity search processing for the partial track $x^{exc}$ that is at least a part of the selected music track x. The similarity search processing includes concat (first similarity search processing) that searches for another music track including the similar partial track $x_{sim}^{exc}$ whose temporal change is similar to that of the partial track $x^{exc}$ of the selected music track x.

According to the information processing device 1 described above, it is possible to perform an unprecedented similar music search of searching for music having similar temporal change, that is, temporal transition. Thus, a range of the similar music search can be widened.

As described with reference to FIGS. 4, 7, and the like, the similarity search processing may include mean (second similarity search processing) that searches for another music track including the similar partial track $x_{sim}^{exc}$ entirely similar to the partial track $x^{exc}$, the user interface unit 2 may receive the selection of concat and mean, and the processing unit 3 may execute the selected similarity search processing. The range of the similar music search can be further widened by selectively making not only concat but also mean available.

As described with reference to FIGS. 3 and 4, the processing unit 3 may execute the feature analysis processing for the selected music track x, and the user interface unit 2 may perform presentation (display or the like) of a characteristic portion of the music track x as the partial track $x^{exc}$. The user interface unit 2 may present the selected music track x in a form in which range designation of the partial track $x^{exc}$ is enabled. As a result, it is possible to perform default range designation of the partial track $x^{exc}$ or range designation by user operation.

As described with reference to FIGS. 5, 6, and the like, the user interface unit 2 may present another music track hit in concat or mean in a playable form. As a result, the content of the music track hit in the search can be confirmed.

As described with reference to FIGS. 1, 7, 8, and the like, the processing unit 3 may execute concat and mean by using the learned model 5 that outputs the corresponding embedding vector $z^{exc}$ when the partial track $x^{exc}$ is input, and concat may include processing of dividing in order the partial track $x^{exc}$ on the time axis to generate a plurality of sub-partial tracks $x_{sub}^{exc}$, and processing of generating the embedding vector $z^{exc}$ corresponding to the partial track $x^{exc}$ by connecting in order a plurality of sub-embedding vectors $z_{sub}^{exc}$ obtained by inputting the respective plurality of sub-partial tracks $x_{sub}^{exc}$ to the learned model 5. For example, in this way, it is possible to perform similarity search in consideration of temporal change.

As described with reference to FIG. 10 and the like, the learning of the learned model 5 may include the distance learning and the classification learning using the loss function, and the loss function may include the self-supervised loss function $L_{SSL}$. By introducing the self-supervised learning, the quality of learning and thus the accuracy of the similarity search can be improved.

As described with reference to FIG. 10 and the like, the learning of the learned model 5 may include the learning of the conversion from the partial track $x^{exc}$ to the embedding vector $z^{exc}$, and the conversion to the probability vector $y^{exc}$, the loss function may include the supervised loss function $L_{ML}$, and at the time of learning of the learned model 5, learning of the conversion to the embedding vector $z^{exc}$ may be performed by using the self-supervised loss function $L_{SSL}$, and learning of the conversion to the embedding vector $z^{exc}$ and the conversion to the probability vector $y^{exc}$ may be performed by using the supervised loss function $L_{ML}$. For example, in this way, the self-supervised learning can be introduced.

As described with reference to FIG. 11 and the like, the self-supervised loss function $L_{SSL}$ may be determined to cause the similarity between the partial tracks $x^{exc}$ derived from the music tracks $x_k$ identical to each other to be larger than the similarity between the partial tracks $x^{exc}$ derived from the music tracks $x_k$ different from each other. Learning can be performed of similarity of features common to partial tracks $x^{exc}$ extracted from the same music track $x_k$.

The information processing method described with reference to FIGS. 4, 8, 9, and the like is also one of the disclosed technologies. The information processing method includes: receiving selection of the music track x (step S1); and executing the similarity search processing for the partial track $x^{exc}$ that is at least a part of the selected music track x (step S5), in which the similarity search processing includes concat (first similarity search processing) of searching for another music track including the similar partial track $x_{sim}^{exc}$ whose temporal change is similar to that of the partial track $x^{exc}$ of the selected music track x. Also by such an information processing method, as described above, the range of the similar music search can be widened.

The information processing program 7 described with reference to FIGS. 1, 4, 8, 13, and the like is also one of the disclosed technologies. The information processing program 7 causes the computer 1000 to execute the processing of receiving the selection of the music track x and the similarity search processing for the partial track $x^{exc}$ that is at least a part of the selected music track x, in which the similarity search processing includes concat (first similarity search processing) of searching for another music track including the similar partial track $x_{sim}^{exc}$ whose temporal change is similar to that of the selected partial track $x^{exc}$. Also by such an information processing program or the like, as described above, the range of the similar music search can be widened. Note that a computer-readable recording medium on which the information processing program 7 is recorded is also one of the disclosed technologies.

The information processing device 9 described with reference to FIGS. 4, 8, 12, and the like is also one of the disclosed technologies. The information processing device 9 includes the processing unit 91 that executes the similarity search processing for the partial track $x^{exc}$ that is at least a part of the uploaded music track x, in which the similarity search processing includes concat (first similarity search processing) that searches for another music track including the similar partial track $x_{sim}^{exc}$ whose temporal change is similar to that of the partial track $x^{exc}$ of the uploaded music track x. Also by such an information processing device 9, as described above, the range of the similar music search can be widened.

Note that the effects described in the present disclosure are merely examples and are not limited to the disclosed contents. There may be other effects.

Although the embodiment of the present disclosure has been described above, the technical scope of the present disclosure is not limited to the above-described embodiment as it is, and various modifications can be made without departing from the gist of the present disclosure. Furthermore, components of different embodiments and modifications may be appropriately combined.

Note that, the present technology can also have the following configurations.

(1) An information processing device comprising:

a user interface unit that receives selection of a music track; and
a processing unit that executes similarity search processing for a partial track that is at least a part of the music track selected, wherein
the similarity search processing includes first similarity search processing of searching for another music track including a partial track whose temporal change is similar to that of the partial track of the music track selected.

(2) The information processing device according to (1), wherein

the similarity search processing includes second similarity search processing of searching for another music track including a partial track entirely similar to the partial track,
the user interface unit receives selection of the first similarity search processing and the second similarity search processing, and
the processing unit executes selected similarity search processing.

(3) The information processing device according to (1) or (2), wherein

the processing unit executes feature analysis processing for the music track selected, and
the user interface unit presents a characteristic portion of the music track as the partial track.

(4) The information processing device according to any one of (1) to (3), wherein
the user interface unit presents the music track selected in a form in which range designation for the partial track is enabled.

(5) The information processing device according to any one of (1) to (4), wherein
the user interface unit presents another music track hit in the similarity search processing in a playable form.
(6) The information processing device according to any one of (1) to (5), wherein

the processing unit executes the similarity search processing by using a learned model that outputs a corresponding embedding vector when the partial track is input, and
the first similarity search processing includes:

processing of dividing in order the partial track on a time axis to generate a plurality of sub-partial tracks; and
processing of generating an embedding vector corresponding to the partial track by connecting in order a plurality of sub-embedding vectors obtained by inputting the respective plurality of sub-partial tracks to the learned model.

(7) The information processing device according to any one of (1) to (6), wherein

the processing unit executes the similarity search processing by using a learned model that outputs a corresponding embedding vector when the partial track is input,
learning of the learned model includes distance learning and classification learning using a loss function, and
the loss function includes a self-supervised loss function.

(8) The information processing device according to (7), wherein

the learning of the learned model includes learning of conversion from a partial track to an embedding vector and conversion to a probability vector,
the loss function includes a supervised loss function, and
at time of the learning of the learned model, learning of the conversion to the embedding vector is performed by using the self-supervised loss function, and learning of the conversion to the embedding vector and the conversion to the probability vector are performed by using the supervised loss function.

(9) The information processing device according to (7) or (8), wherein
the self-supervised loss function is defined to cause a similarity between partial tracks derived from music tracks identical to each other to be larger than a similarity between partial tracks derived from music tracks different from each other.
(10) An information processing method comprising:

receiving selection of a music track; and
executing similarity search processing for a partial track that is at least a part of the music track selected, wherein
the similarity search processing includes first similarity search processing of searching for another music track including a partial track whose temporal change is similar to that of the partial track of the music track selected.

(11) An information processing program causing
a computer to execute:

processing of receiving selection of a music track; and
similarity search processing for a partial track that is at least a part of the music track selected, wherein
the similarity search processing includes first similarity search processing of searching for another music track including a partial track whose temporal change is similar to that of the partial track of the music track selected.

(12) An information processing device comprising

a processing unit that executes similarity search processing for a partial track that is at least a part of an uploaded music track, wherein
the similarity search processing includes first similarity search processing of searching for another music track including a partial track whose temporal change is similar to that of the partial track of the uploaded music track.

Reference Signs List

1 INFORMATION PROCESSING DEVICE
2 USER INTERFACE UNIT
3 PROCESSING UNIT
4 STORAGE UNIT
5 LEARNED MODEL
6 SOUND SOURCE CATALOG
7 INFORMATION PROCESSING PROGRAM
8 NETWORK
9 INFORMATION PROCESSING DEVICE
91 PROCESSING UNIT
92 STORAGE UNIT
93 INFORMATION PROCESSING PROGRAM
1000 COMPUTER
1050 BUS
1100 CPU
1200 RAM
1300 ROM
1400 HDD
1450 PROGRAM DATA
1500 COMMUNICATION INTERFACE
1600 INPUT/OUTPUT INTERFACE
1650 INPUT/OUTPUT DEVICE
$L_{SSL}$ LOSS FUNCTION
$L_{ML}$ LOSS FUNCTION
x MUSIC TRACK
$x^{exc}$ PARTIAL TRACK
$y^{exc}$ PROBABILITY VECTOR
$z^{exc}$ EMBEDDING VECTOR

**Claims**

1. An information processing device comprising:

   a user interface unit that receives selection of a music track; and
   a processing unit that executes similarity search processing for a partial track that is at least a part of the music track selected, wherein
   the similarity search processing includes first similarity search processing of searching for another music track including a partial track whose temporal change is similar to that of the partial track of the music track selected.

2. The information processing device according to claim 1, wherein

   the similarity search processing includes second similarity search processing of searching for another music track including a partial track entirely similar to the partial track,
   the user interface unit receives selection of the first similarity search processing and the second similarity search processing, and
   the processing unit executes selected similarity search processing.

3. The information processing device according to claim 1, wherein

   the processing unit executes feature analysis processing for the music track selected, and
   the user interface unit presents a characteristic portion of the music track as the partial track.

4. The information processing device according to claim 1, wherein
   the user interface unit presents the music track selected in a form in which range designation for the partial track is enabled.

5. The information processing device according to claim 1, wherein

the user interface unit presents another music track hit in the similarity search processing in a playable form.

6. The information processing device according to claim 1, wherein

the processing unit executes the similarity search processing by using a learned model that outputs a corresponding embedding vector when the partial track is input, and
the first similarity search processing includes:

processing of dividing in order the partial track on a time axis to generate a plurality of sub-partial tracks; and
processing of generating an embedding vector corresponding to the partial track by connecting in order a plurality of sub-embedding vectors obtained by inputting the respective plurality of sub-partial tracks to the learned model.

7. The information processing device according to claim 1, wherein

the processing unit executes the similarity search processing by using a learned model that outputs a corresponding embedding vector when the partial track is input,
learning of the learned model includes distance learning and classification learning using a loss function, and
the loss function includes a self-supervised loss function.

8. The information processing device according to claim 7, wherein

the learning of the learned model includes learning of conversion from a partial track to an embedding vector and conversion to a probability vector,
the loss function includes a supervised loss function, and
at time of the learning of the learned model, learning of the conversion to the embedding vector is performed by using the self-supervised loss function, and learning of the conversion to the embedding vector and the conversion to the probability vector are performed by using the supervised loss function.

9. The information processing device according to claim 7, wherein
the self-supervised loss function is defined to cause a similarity between partial tracks derived from music tracks identical to each other to be larger than a similarity between partial tracks derived from music tracks different from each other.

10. An information processing method comprising:

receiving selection of a music track; and
executing similarity search processing for a partial track that is at least a part of the music track selected, wherein
the similarity search processing includes first similarity search processing of searching for another music track including a partial track whose temporal change is similar to that of the partial track of the music track selected.

11. An information processing program causing
a computer to execute:

processing of receiving selection of a music track; and
similarity search processing for a partial track that is at least a part of the music track selected, wherein
the similarity search processing includes first similarity search processing of searching for another music track including a partial track whose temporal change is similar to that of the partial track of the music track selected.

12. An information processing device comprising

a processing unit that executes similarity search processing for a partial track that is at least a part of an uploaded music track, wherein
the similarity search processing includes first similarity search processing of searching for another music track including a partial track whose temporal change is similar to that of the partial track of the uploaded music track.

# FIG.1

INFORMATION PROCESSING DEVICE — 1

USER INTERFACE UNIT — 2

PROCESSING UNIT — 3

STORAGE UNIT — 4

LEARNED MODEL — 5

SOUND SOURCE CATALOG — 6

INFORMATION PROCESSING PROGRAM — 7

# FIG.2

SIMILAR MUSIC
SEARCH APPLICATION

MUSIC TRACK SELECTION

###.mp3

EP 4 579 659 A1

# FIG.3

SIMILAR MUSIC
SEARCH APPLICATION

MUSIC TRACK: ###.mp3

x

ANALYSIS

2

EP 4 579 659 A1

# FIG.4

SIMILAR MUSIC SEARCH APPLICATION

MUSIC TRACK: ###.mp3

$x^{exc}$

X

IN-TRO  A  A  CHO-RUS  B  A  B  CHO-RUS  CHO-RUS  SO-LO  C  C  A  CHO-RUS  CHO-RUS  OUT-RO

CDA···

☑ SEARCH SETTING

·SEARCH TARGET PORTION  ⦿ clip  ◎ track

·SIMILARITY SEARCH PROCESSING  ⦿ concat  ◎ mean

SEARCH

2

EP 4 579 659 A1

# FIG.5

2

SIMILAR MUSIC
SEARCH APPLICATION

☑ SEARCH SETTING
  ·SEARCH TARGET PORTION    ◉ clip    ◎ track
  ·SIMILARITY SEARCH PROCESSING    ◉ concat    ◎ mean

SEARCH

SEARCH RESULT LIST

| NAME | SOUND SOURCE INFORMATION | ... | |
|------|--------------------------|-----|---|
| M1 | D1 | ... | ♪ |
| M2 | D2 | ... | ♪ |
| M2 | D3 | ... | ♪ |
| ... | ... | ... | ... |

EP 4 579 659 A1

FIG.6

# FIG.7

$$z^{exc}$$

5

LEARNED
MODEL

$$x^{exc}$$

# FIG.8

$z^{exc}$

| $z_{sub}^{exc-1}$ | $z_{sub}^{exc-2}$ | $z_{sub}^{exc-3}$ | $z_{sub}^{exc-4}$ |

LEARNED MODEL  5

LEARNED MODEL  5

LEARNED MODEL  5

LEARNED MODEL  5

$x_{sub}^{exc-1}$  $x_{sub}^{exc-2}$  $x_{sub}^{exc-3}$  $x_{sub}^{exc-4}$

$x^{exc}$

# FIG.9

```
                    ┌──────────────────┐
                    │      START       │
                    └──────────────────┘
                             │
                             ▼
        ┌─────────────────────────────────────────┐
        │   RECEIVE SELECTION OF MUSIC TRACK      │  ~S1
        └─────────────────────────────────────────┘
                             │
                             ▼
        ┌─────────────────────────────────────────┐
        │     ANALYZE SELECTED MUSIC TRACK        │  ~S2
        └─────────────────────────────────────────┘
                             │
                             ▼
        ┌─────────────────────────────────────────┐
        │       DISPLAY RESULT OF ANALYSIS        │  ~S3
        └─────────────────────────────────────────┘
                             │
                             ▼
        ┌─────────────────────────────────────────┐
        │       RECEIVE DESIGNATION OF            │
        │    PARTIAL TRACK (SEARCH KEY),          │  ~S4
        │   SEARCH SETTING, AND THE LIKE          │
        └─────────────────────────────────────────┘
                             │
                             ▼
        ┌─────────────────────────────────────────┐
        │      PERFORM SIMILARITY SEARCH          │  ~S5
        └─────────────────────────────────────────┘
                             │
                             ▼
        ┌─────────────────────────────────────────┐
        │       DISPLAY SEARCH RESULT             │  ~S6
        └─────────────────────────────────────────┘
                             │
                             ▼
                    ┌──────────────────┐
                    │       END        │
                    └──────────────────┘
```

# FIG.10

# FIG.11

| SIMILARITY | | $O_{2k}$ | | | | $O_{2k-1}$ | | | |
|---|---|---|---|---|---|---|---|---|---|
| | | k=1 | k=2 | k=3 | k=4 | k=1 | k=2 | k=3 | k=4 |
| $O_{2k}$ | k=1 | - | | | | LARGE | | | |
| | k=2 | | - | | | | LARGE | | |
| | k=3 | | | - | | | | LARGE | |
| | k=4 | | | | - | | | | LARGE |
| $O_{2k-1}$ | k=1 | LARGE | | | | - | | | |
| | k=2 | | LARGE | | | | - | | |
| | k=3 | | | LARGE | | | | - | |
| | k=4 | | | | LARGE | | | | - |

# FIG.12

INFORMATION PROCESSING DEVICE — 1

USER INTERFACE UNIT — 2

PROCESSING UNIT — 3

STORAGE UNIT — 4

INFORMATION PROCESSING PROGRAM — 7

NETWORK — 8

INFORMATION PROCESSING DEVICE — 9

PROCESSING UNIT — 91

STORAGE UNIT — 92

LEARNED MODEL — 5

SOUND SOURCE CATALOG — 6

INFORMATION PROCESSING PROGRAM — 93

EP 4 579 659 A1

# FIG.13

## INTERNATIONAL SEARCH REPORT

| International application No. |
| --- |
| **PCT/JP2023/027136** |

| A. | CLASSIFICATION OF SUBJECT MATTER |
| --- | --- |

*G10L 25/54*(2013.01)i; *G06F 16/68*(2019.01)i
FI:    G10L25/54; G06F16/68

According to International Patent Classification (IPC) or to both national classification and IPC

| B. | FIELDS SEARCHED |
| --- | --- |

Minimum documentation searched (classification system followed by classification symbols)

G10L25/54; G06F16/68

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2009-15535 A (JAPAN LABOTECH CORP., SHISHIBORI, Masami, KITA, Kenji, TSUGE, Satoru) 22 January 2009 (2009-01-22) <br> paragraphs [0021]-[0066], fig. 1-10 | 1-2, 5, 10-12 |
| Y | | 7-9 |
| A | | 3-4, 6 |
| Y | JP 2022-501651 A (SONY INTERACTIVE ENTERTAINMENT INC.) 06 January 2022 (2022-01-06) <br> paragraphs [0013]-[0041], fig. 1-3 | 7-9 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 October 2023** | **31 October 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
**Information on patent family members**

International application No.

**PCT/JP2023/027136**

| Patent document cited in search report | | | Publication date (day/month/year) | Patent family member(s) | | | Publication date (day/month/year) |
|---|---|---|---|---|---|---|---|
| JP | 2009-15535 | A | 22 January 2009 | (Family: none) | | | |
| JP | 2022-501651 | A | 06 January 2022 | US | 2020/0104319 | A1 | |
| | | | | paragraphs [0019]-[0055], fig. 1-3 | | | |
| | | | | WO | 2020/068624 | A1 | |
| | | | | CN | 112912897 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011175006 A